(19) Europäisches Patentamt
European Patent Office
Office européen des brevets

(11) Publication number: **0 068 632**
**B1**

# (12) EUROPEAN PATENT SPECIFICATION

(45) Date of publication of patent specification: **30.12.86**

(51) Int. Cl.$^4$: **C 08 F 283/00,** C 08 F 299/00

(21) Application number: **82302642.2**

(22) Date of filing: **24.05.82**

## (54) Polymerizable carbamic ester resins useful for preparing cast optical articles.

(30) Priority: **05.06.81 US 270841**

(43) Date of publication of application:
**05.01.83 Bulletin 83/01**

(45) Publication of the grant of the patent:
**30.12.86 Bulletin 86/52**

(84) Designated Contracting States:
**DE FR GB IT**

(56) References cited:
**US-A-3 928 299**
**US-A-4 233 425**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Hegel, Ramon F.**
**2501, Hudson Road P.O. Box 33427**
**Saint Paul Minnesota 55133 (US)**

(74) Representative: **Baillie, Iain Cameron et al**
**c/o Ladas & Parry Isartorplatz 5**
**D-8000 München 2 (DE)**

**EP 0 068 632 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical field

This invention relates to resins having a plurality of ethylenically-unsaturated carbamic ester groups. Also, this invention relates to optical casting resins prepared from resins having a plurality of ethylenically-unsaturated carbamic ester groups. In addition, this invention relates to plastic optical articles prepared from such optical casting resins, and to a method for making the same.

Background art

Cast plastic optical articles, e.g., plastic ophthalmic lenses, are widely used in applications formerly reserved for ground glass optical articles, as such plastic optical articles are light in weight and inexpensive to reproduce. As disclosed in U.S. Patent Nos. 3,830,460 and 3,931,373, the most widely used plastic ophthalmic lens material is polymerized diethyleneglycol bis(allyl carbonate), a polymer characterized by excellent clarity, resistance to discoloration, high strength, and high impact resistance. However, polymerization of diethyleneglycol bis(allyl carbonate) is generally accompanied by high shrinkage during cure (e.g., about 11 to 14 percent) and long cure time (e.g., about 5 to 16 hours or more). Such high shrinkage levels create difficulties in the production of plastic ophthalmic lenses from this material, particularly in the production of lenses having large differences in thickness between the center and edges of the lens. Such long cure times tie up production facilities and lead to inefficient utilization of the glass dies in which plastic ophthalmic lenses are molded. Also, the thermal cure cycle used to polymerize diethyleneglycol bis(allyl carbonate) consumes large amounts of energy and undesirably thermally stresses the glass dies used to manufacture plastic lenses.

When making an optical casting resin for use in preparing plastic optical articles, it is desirable not only to have good optical properties in the finished, cast articles (e.g., clarity, absence of coloration such as yellow coloration, and high hardness), but also to have good handling properties for the casting resin itself (e.g., rapid cure rate, low shrinkage and resistance to stress cracking during cure, and sufficiently low viscosity to enable rapid mold filling). Optimization of all of these factors has proven very difficult, and no optical casting resin has been reported which offers a better balance of properties than diethyleneglycol bis(allyl carbonate).

Some polymerizable compositions containing four or more ethylenically-unsaturated carbamic ester groups ("ethylenically-unsaturated carbamic ester groups" as used herein, will refer to polymer side chain groups having a single urethane linkage and terminal olefinic functionality) and a copolymerizable diluent monomer have been broadly included in disclosures relating to thin-film or coating compositions such as paints, varnishes, printing plates, and photoresists, which are generally less than 2 millimeters thick. These references fail to teach which, if any, of those compositions would have a combination of useful properties such as low polymerization shrinkage, low viscosity, absence of coloration, high hardness, and resistance to stress cracking. Thus, while within the many permutations and combinations of resins disclosed in these references there may be compositions, below described, which constitute Applicant's invention, these compositions are not specifically disclosed or exemplified in such references. Also, there is no teaching in these references regarding the manner of obtaining resins having a combination of properties which are useful for casting optical articles. For example, many of the compositions shown in these references are derived from diisocyanates (e.g., toluene diisocyanate), and the resulting compositions have two or more urethane linkages in each side chain. These compositions generally have too high a viscosity to be useful for optical casting purposes. References disclosing, inter alia, resins having four or more side chains with urethane functionality and olefinic unsaturation, together with a copolymerizable diluent monomer, include U.S. Patent Nos. 3,509,234, 3,700,643, 3,782,961, 3,907,865, 3,928,299, 3,954,584, 4,006,024, 4,072,770, 4,112,017, 4,131,602, 4,133,723, 4,188,455, 4,233,425, and 4,228,232, and U.K. Published Patent Application No. 2,050,396A.

Disclosure of invention

The present invention provides, in one aspect, optical articles prepared from polymerizable resins having 4 or more polymer side chain groups having a single urethane linkage and terminal olefinic functionality, per molecule (such resins being sometimes referred to hereafter as "polymerizable carbamic ester resins"), characterized in that said resins have a backbone derived from a polyol having (1) at least 4 hydroxyalkyl or hydroxycycloalkyl groups per molecule, (2) a hydroxyl equivalent weight of 75 to 1000, preferably 175 to 300, and (3) a molecular weight of 300 to 5000, preferably 700 to 2100. The preferred polymerizable carbamic ester resins have the formula:

$$[H_2C{=}\overset{\displaystyle R^1}{\overset{|}{C}}{-}A{-}NH{-}\overset{\displaystyle O}{\overset{\|}{C}}{-}O]_nB \qquad \text{I}$$

wherein:

$R^1$ is a hydrogen atom or a methyl radical;

A is a divalent aliphatic radical selected from $-R^2-$ and

$$-\overset{O}{\overset{\|}{C}}OR^2-,$$

in which $R^2$ is an alkylene radical having 1 to 6 carbon atoms or a 5- or 6-membered cycloalkylene radical having 5 to 10 carbon atoms, said aliphatic radical optionally containing 1 or 2 catenary oxygen atoms or

$$-\overset{O}{\overset{\|}{C}}-O-$$

groups;

B is a backbone which is a polyvalent radical obtained by removal of the hydroxyl groups from a polyester polyol, polyether polyol, or polyacrylate polyol, said polyols having at least 4 hydroxyalkyl or hydroxycycloalkyl groups per molecule, a hydroxyl equivalent weight of 75 to 1000, preferably 175 to 300, and a molecular weight of 300 to 5000, preferably 700 to 2100; and

n is 4 to 15.

These resins have low polymerization shrinkage and low viscosity, making them valuable for use in molding processes.

Also, the present invention provides optical articles of cured polymerizable optical casting resin, having a thickness greater than 2 millimeters, an index of refraction greater than 1.45 and less than 1.75, light transmission greater than 85%, yellow coloration less than 4 Gardner b units, and a Barcol hardness greater than 15 (with Barcol hardness being measured herein using indenter No. "GYZJ 934-1", commercially available from the Barber-Coleman Co.), said optical casting resin comprising:

a) 50 to 80 percent by weight, and preferably 60 to 80 percent by weight, of one or more of the above-described polymerizable carbamic ester resins;

b) 50 to 20 percent by weight, and preferably 40 to 20 percent by weight, of one or more diluent monomers having one or more ethylenically-unsaturated groups copolymerizable with ethylenically-unsaturated compounds; and

c) zero to 5 percent by weight of an energy-activatable source of free radicals; said optical casting resin, when uncured, being liquid at a temperature above 40°C, and preferably above 20°C. These articles have low yellow coloration, high hardness, low birefringence, and resistance to stress cracking, making them valuable for use as ophthalmic lenses, diffraction gratings, Fresnel lenses, and video discs.

In addition, the present invention provides a process for preparing cast optical articles, characterized in that:

a) bubbles are removed from a polymerizable carbamic ester resin prepared by (i) reacting together at least one monoisocyanato-substituted addition-polymerizable ethylenically-unsaturated organic compound and at least one polyol having four to 15 hydroxyalkyl or hydroxycycloalkyl groups per molecule, a hydroxyl equivalent weight of 75 to 1000, preferably 175 to 300, and a molecular weight of about 300 to 5,000, preferably 700 to 2100, the resulting reaction product being essentially free of unreacted isocyanate; and (ii) 50 to 80 parts by weight of said reaction product are mixed with 50 to 20 parts by weight of at least one diluent monomer having one or more ethylenically-unsaturated groups copolymerizable with ethylenically-unsaturated compounds, and 0 to 5 parts by weight of an energy-activatable source of free radicals;

b) the resulting optical casting resin is introduced into a suitable mold; and

c) said optical casting resin is polymerized.

The present invention according to claims 9 and 10 also provides novel polyester resins and polyacrylate resins for use in the above-described articles and process.

## Detailed description

In the practice of the present invention, the polymerizable carbamic ester resins are preferably prepared by reacting one or more monoisocyanato substituted addition-polymerizable terminal mono ethylenically-unsaturated organic compounds (such compounds being sometimes referred to hereafter as "ethylenically unsaturated isocyanates") with at least one polyol as defined in claim 1 which itself is preferably a polyester polyol, polyether polyol or polyacrylate polyol (such polyester polyols, polyether polyols, and polyacrylate polyols being sometimes referred to collectively hereafter as "polyols"), said polyols having at least four hydroxyalkyl or hydroxycycloalkyl groups per molecule. The amount of reactants and time of reaction are chosen so as to result in consumption of essentially all free isocyanate groups in the reaction mixture, as determined by, for example, infrared analysis. Generally, about 0.8 to 1 mole of ethylenically unsaturated isocyanates are used per mole of hydroxyl groups in the polyols. Preferably, the reaction between ethylenically unsaturated isocyanates and polyols is carried out in the presence of a suitable catalyst such as dibutyltin dilaurate. The reaction is generally performed in a suitable mixing vessel under substantially anhydrous conditions at temperatures from about 25°C to 100°C for ten minutes or more, utilizing batch or continuous processing.

Preferred ethylenically unsaturated isocyanates are compounds having the general formula:

$$H_2C=\overset{\overset{\displaystyle R^1}{|}}{C}-A-NCO \qquad II$$

wherein $R^1$ and A are as defined above. Preferably, $R^1$ is methyl and A is a divalent carbonyloxyalkylene radical having 2 to 7 carbon atoms.

Preferred compounds of Formula II are isocyanato-alkyl acrylates and methacrylates such as isocyanatomethyl acrylate, 2-isocyanatoethyl acrylate, 2-isocyanatoethyl methacrylate, 3-isocyanatopropyl acrylate, 3-isocyanatopropyl methacrylate, and 6-isocyanatohexyl acrylate. 2-Isocyanatoethyl methacrylate is a preferred ethylenically unsaturated isocyanate and is described in a data sheet entitled "Experimental Monomer XD-30153.00" from Dow Chemical Co. Other compounds of Formula II include ethylenically unsaturated isocyanate esters such as allyl isocyanate, methallyl isocyanate, 4-ethenylcyclohexylisocyanate, and 2-(2-acryloyloxyethoxy)ethyl isocyanate, but these are less preferred than isocyanatoalkyl acrylates and methacrylates. The ethylenically unsaturated isocyanates of Formula II can be prepared using methods known to those skilled in the art of organic synthesis.

Polyols which can be used to prepare the polymerizable carbamic ester resins of this invention preferably contain only carbon, hydrogen and oxygen, but can, if desired, contain other chain atoms (e.g., sulfur atoms) or substituent groups (e.g., chloromethyl groups) which do not interfere with the functioning of the polymerizable carbamic ester as an optical casting resin. Preferably, such polyols have a hydroxyl equivalent weight between 175 and 300. If polyols having hydroxyl equivalent weights less than 75 are used, the resulting polymerizable carbamic ester resin will exhibit high shrinkage during cure, making it unsuitable for use as an optical casting resin. If polyols having hydroxyl equivalent weight greater than about 1000 are used, the resulting polymerizable carbamic ester resin will have inadequate hardness for use as an optical casting resin. Polyester polyols are preferred polyols for use in preparing the polymerizable carbamic ester resins of this invention.

Suitable polyester polyols can be prepared by esterifying (a) $C_{2-15}$ aliphatic acyclic or $C_{4-15}$ alicyclic polyols having 3 or more hydroxyl groups per molecule, with (b) polycarboxylic acids (preferably dicarboxylic acids) selected from $C_{4-12}$ aliphatic acyclic polycarboxylic acids, $C_{5-8}$ alicyclic polycarboxylic acids, $C_{5-15}$ aromatic polycarboxylic acids, or methyl or ethyl esters or anhydrides of such polycarboxylic acids (such polycarboxylic acids, methyl or ethyl esters thereof, and anhydrides thereof being sometimes referred to collectively hereafter as "polycarboxylic acids"). Optionally, $C_{2-15}$ aliphatic acyclic diols, $C_{4-15}$ alicyclic diols, $C_{2-6}$ *omega*-hydroxyalkanecarboxylic acids, or lactones can be added to the above-described mixture of $C_{2-15}$ aliphatic acyclic or $C_{4-15}$ alicyclic polyols and polycarboxylic acids. The ratio of total moles of aliphatic acyclic polyols, alicyclic polyols, aliphatic acyclic diols, and alicyclic diols to total moles of polycarboxylic acids, *omega*-hydroxyalkanecarboxylic acids, and lactones should be such as to provide essentially complete esterification of carboxylic acid groups, and a product polyester having a molecular weight no more than 5,000. Also, sufficient aliphatic acyclic or alicyclic polyols should be used to provide a product polyester polyol having at least 4 hydroxyl groups per molecule.

Especially preferred polyester polyols are esters derived from a specified amount of certain cyclic compounds, and are prepared by employing 0.02 to 0.5 moles of cyclic compounds selected from (a) $C_{5-8}$ alicyclic dicarboxylic acids or anhydrides thereof, (b) $C_{5-15}$ aromatic dicarboxylic acids or anhydrides thereof, or (c) $C_{4-15}$ cycloalkylene diols per mole of $C_{2-15}$ aliphatic acyclic polyols, with the remainder of the compounds from which said polyester polyols is derived being acyclic compounds. The resulting polyester polyols can be used to prepare polymerizable carbamic ester resins which provide cast optical articles having especially high Tg and Barcol hardness.

Suitable polyester polyols can also be prepared by combining, on a molar basis, one mole of $C_{4-15}$ polyols having four or more hydroxyl groups per molecule and about 4 to 15 moles of $C_{2-6}$ *omega*-hydroxyalkanecarboxylic acids or lactones. The reactants should be combined in amounts sufficient to esterify essentially all carboxylic acid groups present and provide a product polyester polyol having a molecular weight no more than 5000, and having at least four hydroxyl groups per molecule.

Aliphatic acyclic polyols which can be used to prepare the above-described polyester polyols include ethylene glycol, 1,4-butanediol, 1,3-butanediol, 2,2-dimethyl-1,3-propanediol, 1,6-hexanediol, 1,12-dodecanediol, glycerine, 2-hydroxymethyl-1,3-propanediol, 1,1,1-tri(hydroxymethyl)propane, 1,2,4-butanetriol, 1,2,6-hexanetriol, dipropylene glycol, pentaerythritol, dipentaerythritol, tripentaerythritol, sorbitol, disorbitol, and mixtures thereof.

Alicyclic polyols which can be used to prepare the above-described polyester polyols include 1,4-cyclohexanediol, 1,4-*bis*(hydroxymethyl)cyclohexane, *bis*(4-hydroxycyclohexyl)methane, *bis*-(4-hydroxymethylcyclohexyl)methane, 2,2-*bis*(4-hydroxycyclohexyl)propane, and mixtures thereof.

Suitable polycarboxylic acids which can be used to prepare the above-described polyester polyols include succinic acid, maleic acid, glutaric acid, 2,2-dimethylsuccinic acid, pimelic acid, adipic acid, sebacic acid, dilactic acid, tetrahydrophthalic acid, hexahydrophthalic acid, phthalic acid, phthalic anhydride, isophthalic acid, terephthalic acid, tetrachlorophthalic acid, 2,2'-benzophenonedicarboxylic acid, 4',4'-diphenylmethanedicarboxylic acid, 2,5-naphthalenedicarboxylic acid, dimethyl succinate, diethyl adipate, dimethyl tetrahydrophthalate dimethyl phthalate, and mixtures thereof.

The above-described polyester polyols can be formed using procedures well known in the art. Usually,

the polyester polyol is formed by direct esterification, ester exchange, or condensation reaction between (1) the (a) $C_{2-15}$ aliphatic acyclic or $C_{4-15}$ alicyclic polyols having 3 or more hydroxyl groups per molecule, or (b) $C_{4-15}$ polyols having 4 or more hydroxyl groups per molecule and, where used, (2) the polycarboxylic acids, and, where used, (3) the aliphatic acyclic diols, alicyclic diols, *omega*-hydroxyalkanecarboxylic acids, or lactones. Generally, the above reactants are combined, preferably in the presence of a suitable esterification catalyst, and heated to a temperature sufficient to distill off volatile side products, preferably under an inert atmosphere such as carbon dioxide or nitrogen. The reaction is completed by heating the reactants under vacuum for about 2 to 24 hours or more, until the acid number of the reaction mixture falls below about 5 milligrams of KOH per gram of reaction mixture and the hydroxyl equivalent weight of the reaction mixture is between about 75 and 1000, preferably between about 175 and 300.

Suitable commercially available polyester polyols include "Lexorez" 5171-280, 5171-260, and 5171-200 (polyester polyols derived from trimethylolpropane, dipropylene glycol, adipic acid, and phthalic anhydride, having a hydroxyl functionality of 5 to 7, and hydroxyl equivalent weights of 200, 216, and 280, respectively), commercially available from Inolex Corporation, "Lexorez" XP 142—144 (polyester polyol derived from neopentyl glycol, trimethylolpropane, and adipic acid, having a hydroxyl functionality of 5 to 7, a hydroxyl equivalent weight of 200, and a molecular weight of 1000), commercially available from Inolex Corporation, and "Rucoflex" F-2016-185 (polyester polyol having a nominal hydroxyl functionality of 4, a nominal hydroxyl equivalent weight of 300, and a nominal molecular weight of 1200), commercially available from Hooker Chemical Co. "Lexorez 5171-280" is a preferred polyester polyol.

Polyether polyols which can be used to prepare the polymerizable carbamic ester resins of this invention are preferably prepared by the condensation of aliphatic polyols having at least four hydroxyl groups per molecule with alkylene oxides, in the presence of an alkaline catalyst. Preferred aliphatic polyols for use in the preparation of such polyether polyols include erythritol, pentaerythritol, mannitol, sorbitol, and mixtures thereof. Preferred alkylene oxides for use in the preparation of such polyether polyols include butylene oxide, propylene oxide, and mixtures thereof. Polyester polyols are more preferred than polyether polyols for preparation of the polymerizable carbamic ester resins of this invention, because the resulting cast optical articles exhibit less tendency toward yellowing as expressed in Gardner b units when measured according to ASTM D-1925-70, using a "Gardner" colorimeter.

Suitable commercially available polyether polyols include "Niax" LS-490 (polyetherpolyol having a hydroxyl functionality of 6, a hydroxyl equivalent weight of 114, and a molecular weight of 684), commercially available from Union Carbide Co.

Polyacrylate polyols which can be used to prepare the polymerizable carbamic ester resins of this invention are polymers of hydroxyalkyl acrylates or methacrylates prepared with or without other copolymerizable ethylenically unsaturated monomers that have been polymerized in the presence of a sufficient amount of chain terminator to limit the molecular weight of the resulting polyacrylate polyol to below 5000.

Suitable polyacrylate polyols include "TSAX" 11071, (polyacrylate polyol having a hydroxyl equivalent weight of 900), available from Henkel Corp.

Diluent monomers for use in the above-mentioned optical casting resins of this invention are free-radically polymerizable monomers such as olefins. Preferred diluent monomers contain at least one acrylyl or methacrylyl radical. Suitable diluent monomers include, for example, acrylic acid, methacrylic acid, acrylamide, methacrylamide, methyl acrylate, methyl *alpha*-chloroacrylate, ethyl acrylate, hexyl acrylate, 2-ethylhexyl acrylate, butoxyethoxyethyl acrylate, neopentylglycol diacrylate, pentaerythritol mono-, di-, or triacrylate or mixtures thereof, isodecyl acrylate, trimethylolpropane mono-, di-, or triacrylate or mixtures thereof, 2-phenoxyethyl acrylate, glycidyl acrylate, 2-ethoxyethyl acrylate, 2-methoxyethyl acrylate, tetrahydrofurfuryl acrylate, 2,2,2-trifluoroethyl acrylate, cyanoethyl acrylate, 2-carbamoyloxyethyl acrylate, 2-(N-methylcarbamoyloxy)ethyl acrylate, 2-(N-butylcarbamoyloxy)ethyl acrylate, methacrylates of the above acrylates, and mixtures of the above diluent monomers. Other diluent monomers which can be used include acrylonitrile, styrene, 4-methylstyrene, *alpha*-methylstyrene, *alpha*-chlorostyrene, 4-bromostyrene, cyclopentadiene, vinyl chloride, vinylidene chloride, vinyl acetate, vinyl methyl ketone, isopropyl vinyl ketone, and mixtures thereof. Preferably, the diluent monomers are added to the polymerizable carbamic ester resin after formation thereof, rather than being present during formation of the polymerizable carbamic ester resin, in order to avoid possible yellowing of the polymerizable carbamic ester resin.

By selecting various diluent monomers or mixtures thereof, the index of refraction and cure time of the cast optical articles of this invention can be adjusted within limits. For example, mixtures of neopentylglycol diacrylate and 2-phenoxyethyl acrylate can be used as diluent monomers, and the ratio of these two diluent monomers can be altered to vary the index of refraction of the resulting cast optical articles between about 1.50 and 1.54. Other diluent monomers can be similarly used, and their use for altering index of refraction is familiar to those skilled in the art. Cure times for optical casting resins containing various diluent monomers are described in more detail in the examples below.

The index of refraction of the cast optical articles of this invention can be varied by other means if desired. For example, increasing the aromatic content of the optical casting resin will tend to increase the index of refraction of articles cast therefrom. Also, use of halogenated dicarboxylic acids, halogenated polyols, or halogenated diluent monomers to form the optical casting resins will tend to increase the index

of refraction of articles cast therefrom, at some decrease in resistance of the cured article toward yellowing after exposure to sunlight (i.e., weathering resistance).

The optical casting resins of this invention optionally contain zero to 5 percent by weight of an energy-activatable source of free radicals, i.e., a free-radical polymerization initiator which generates or liberates free radicals upon addition to the optical casting resins of energy such as thermal energy, actinic radiation, or electron beam radiation. Curing techniques such as thermal energy and actinic radiation ordinarily require the use of positive amounts (i.e., more than zero percent by weight) of polymerization initiator. No polymerization initiator (i.e., zero percent by weight) is ordinarily required when curing techniques such as electron beam energy are used. Free-radical polymerization initiators for use with this invention will be familiar to those skilled in the art of polymerization, and are described, for example, in Chapter II of "Photochemistry" by Calvert and Pitts, John Wiley & Sons (1966).

Thermally-activated free-radical polymerization initiators include organic peroxides, organic hydroperoxides, and other known initiators, such as benzoyl peroxide, *tertiary*-butyl perbenzoate, cumene hydroperoxide, isopropyl peroxydicarbonate, azo*bis*(isobutyronitrile), and the like. The preferred free-radical polymerization initiators for use in this invention are photopolymerization initiators which release free-radicals when the optical casting resins of this invention are irradiated with suitable electromagnetic radiation. Use of photopolymerization initiators provides rapid cure, thereby saving energy and increasing utilization of glass dies. Also, use of optical casting resins containing photopolymerization initiators reduces thermally-induced stress cracking of glass dies. In addition, use of photopolymerization initiators shortens cure cycle time, thereby reducing chemical attack upon the glass die by the optical casting resin and reducing discoloration of the cast optical article (e.g., as caused by plasticizers commonly present in the resilient annular gaskets used with glass dies).

Useful photopolymerization initiators include acyloin and derivatives thereof such as methyl benzoyl formate, benzoin, benzoin methyl ether, benzoin ethyl ether, benzoin isopropyl ether, benzoin isobutyl ether, and *alpha*-methylbenzoin, diketones such as benzil and diacetyl, organic sulfides such as diphenyl monosulfide, diphenyl disulfide, decyl phenyl sulfide, and tetramethylthiuram monosulfide, S-acyldithiocarbamates such as S-benzoyl-N,N-dimethyldithiocarbamate, phenones such as acetophenone, *alpha,alpha,alpha* - tribromoacetophenone, *alpha,alpha* - diethoxyacetophenone, *ortho*-nitro-*alpha,alpha,alpha*-tribromoacetophenone, benzophenone, and 4,4'-*bis*(dimethylamino)benzophenone, and sulfonyl halides such as *p*-toluenesulfonyl chloride, 1-naphthalenesulfonyl chloride, 2-naphthalenesulfonyl chloride, 1,3-benzenedisulfonyl chloride, 2,4-dinitrobenzenesulfonyl bromide and *p*-acetamidobenzenesulfonyl chloride. Methyl benzoyl formate is a preferred photopolymerization initiator, as it provides cast optical products having low yellow color.

For curing techniques such as thermal energy and actinic radiation, the free-radical polymerization initiator is ordinarily used in amounts ranging from 0.01 to 5 percent by weight compared to the total weight of optical casting resin. When the polymerization initiator quantity is less than about 0.01 percent by weight, the polymerization rate of the optical casting resin is undesirably slowed. When the polymerization initiator is used in amounts greater than 5 percent by weight, no appreciable increase in polymerization rate is observed compared to compositions containing percent by weight of polymerization initiator. Preferably, 0.05 to 1.0 percent by weight of polymerization initiator is used in the polymerizable optical casting resins of this invention cured by thermal energy or actinic radiation.

Adjuvants which are conventionally used in resins for cast optical articles, such as inhibitors, antioxidants, dyes, mold release agents, and the like can be added if desired. Unlike the casting of diethyleneglycol bis(allyl carbonate), a mold release agent is generally not required with the optical casting resins of this invention, and the absence of a mold release agent represents a manufacturing advantage of this invention.

Several physical properties of the optical casting resins of this invention can be adjusted by, for example, varying the amounts and types of monomers used to synthesize the polymerizable carbamic ester resin, varying the relative amounts of polymerizable carbamic ester resin(s) and diluent monomer(s), varying the types of diluent monomers, or by using a mixture of diluent monomers. For example, the hardness of the cured optical casting resin can be increased by (1) increasing the vinyl functionality or decreasing the molecular weight of the polymerizable carbamic ester resin, (2) using a polymerizable carbamic ester resin derived from a polyester polyol prepared from a mixture of cyclic compounds and aliphatic acyclic polyol, containing the above-described ratio of 0.02 to 0.5 moles of cyclic compounds selected from alicyclic dicarboxylic acids, aromatic dicarboxylic acids, anhydrides thereof, or cycloalkylene diols per mole of aliphatic acyclic polyol, or (3) by increasing the olefinic functionality of the diluent monomer. Shrinkage of the optical casting resin during cure can be reduced by increasing the molecular weight of the polymerizable carbamic ester resin. Ordinarily, it is desirable to minimize yellow coloration in plastic optical articles both at the time of manufacture and after exposure of such articles to sunlight. Tendency toward initial yellow coloration can be reduced by employing purified ingredients and by utilizing the preferred photoinitiator methyl benzoyl formate. Weathering resistance can be increased by minimizing aromatic content in the backbone B of Formula I, above, or by adding to the optical casting resin one or more ultraviolet absorbers such as hydroxybenzophenones (e.g., 2,4-dihydroxybenzophenone and 2-hydroxy-4-methoxybenzophenone), carboxybenzophenones (e.g., 2-hydroxy-4-carboxybenzophenone), benzotriazoles (e.g., 2-(2'-hydroxy-5'-methylphenyl)benzotriazole), and cyanoacrylates (e.g., 2-ethylhexyl

2-cyano-3,3-diphenylacrylate). Abrasion resistance of the cured optical casting resin can be increased by using a diluent monomer having a high level of olefinic functionality (e.g., pentaerythritol tetraacrylate or trimethylolpropane triacrylate). The working environment in production operations can be improved by using a diluent monomer such as neopentylglycol dimethacrylate or n-butylcarbamoyloxyethyl acrylate. Viscosity of the optical casting resin can be reduced by utilizing a diluent monomer having low viscosity and/or high solvating power with respect to the polymerizable carbamic ester resin.

The optical articles of this invention include articles which are currently prepared from ground glass or cast plastic, such as ophthalmic lenses, diffraction gratings, Fresnel lenses, and video discs. Such articles generally have a thickness of 2 mm or more, and can be prepared from optical casting resins of this invention which are made by mixing in a suitable vessel in any convenient order the diluent monomer and polymerizable carbamic ester resin, to provide 100 parts of a composition having a viscosity less than 1000 poise at 20°C. To the resulting mixture is then added up to 5 parts by weight of polymerization initiator, if desired. Mixing is continued until the components of the composition are in a single phase. If prepared using photoinitiator, the composition is preferably stored in the dark or under a suitable safelight until ready for use.

At the time of use, the composition is preferably degassed using a vacuum less than about 25 Torr or by flowing the composition in a thin film past a suitable boundary. The degassed composition is introduced, preferably using a pressure of about 2 to 10 $Kg/cm^2$, into a suitable mold corresponding to the shape of the optical article which is desired to be prepared. Such molds are well known to those skilled in the art and are generally made of glass or glass and metal and may include a resilient gasket which compensates for polymerization shrinkage. Optical casting resins of this invention containing thermally-activated polymerization initiator are cured or polymerized to a hard, transparent state by placing the filled mold into a forced air oven or water bath at a temperature of about 50° to 100°C for a period of about 1 to 12 hours, followed by an increase in temperature to about 75° to 150°C over a period of about 1 to 12 hours, followed by removal of the molds from the oven or bath, opening of the molds, and cooling of the optical articles contained therein.

For optical casting resins of this invention containing photopolymerization initiator, the molds are filled as described above, placed on a rotating table under a source of electromagnetic (e.g., actinic) radiation such as a high energy ultraviolet source having an output of, e.g., about 25 to 250 watts/cm of source length, and rotated at a speed of about 50 to 100 rpm. Preferably, the duration and intensity of such exposure is adjusted to provide for partial (e.g., about 90 percent) polymerization of the optical articles contained in the molds. The partially polymerized optical articles can then be removed from the molds. Cure or photopolymerization of the articles to a hard, transparent state can be completed by exposure of the optical articles (unsupported by molds) to sufficient additional radiation to complete the polymerization of such articles. If desired, final cure can be carried out using thermal energy.

Preferred photoinitiation energy sources emit actinic radiation, i.e., radiation having a wavelength of 700 nanometers or less which is capable of producing, either directly or indirectly, free radicals capable of initiating addition polymerization of the optical casting resins of this invention. Particularly preferred photoinitiation energy sources emit ultraviolet radiation, i.e., radiation having a wavelength between about 180 and 460 nanometers, including photoinitiation energy sources such as mercury arc lights, carbon arc lights, low, medium, or high pressure mercury vapor lamps, swirl-flow plasma arc lamps, ultraviolet light emitting diodes, and ultraviolet light emitting lasers. Particularly preferred ultraviolet light sources are medium or high pressure mercury vapor lamps, such as Models 60-2032, 60-0393, 60-0197, and 50-2031 (commercially available from PPG Industries, Inc.), and Models 6512A431, 6542A431, 6565A431, and 6577A431 (commercially available from Hanovia, Inc.).

Ionizing radiation can also be used to cure the optical casting resins of this invention. Ionizing radiation is radiation possessing an energy at least sufficient to produce ions either directly or indirectly and includes ionizing particle radiation and ionizing electromagnetic radiation. Ionizing particle radiation designates the emission of electrons (i.e., "E-beam" radiation) or accelerated nuclear particle such as protons, alpha particles, deuterons, beta particles, neutrons or their analogs. Charged particles can be accelerated using such devices as resonance chamber accelerators, DC potential gradient accelerators, betatrons, synchrotrons, cyclotrons, and the like. Uncharged particles (i.e., neutrons) can be produced by bombarding a selected light metal such as beryllium with positive particles of high energy. Ionizing particle radiation can also be obtained by the use of an atomic pile, radioactive isotopes or other natural or synthetic radioactive materials. Ionizing electromagnetic radiation transmits high energy photons by means such as X-rays, bremsstrahlung and gamma rays.

The following examples are offered to aid understanding of the present invention.

Example 1

This example illustrates the preparation of a polymerizable carbamic ester resin. Into a reaction flask equipped with an agitator, liquid addition funnel, thermometer, and inlet tube for the introduction of a dry nitrogen atmosphere was placed 600 g (0.6 mole) of "Lexorez" 5171-280, 1.5 g dibutyltin dilaurate, and 2.1 g "Irganox" 1010 antioxidant ((tetrakis)-3-(3,5-di(*t*-butyl)-4-hydroxyphenyl) propionyloxymethyl)methane, commercially available from Ciba Geigy Inc.). The resulting mixture was agitated, and 465 g (3.0 moles) of 2-isocyanatoethyl methacrylate was added to the reaction flask over a 30 minute period, with the rate of

addition of the 2-isocyanatoethyl methacrylate being adjusted to keep the temperature of the reaction mixture from exceeding about 75°C. A heating mantle was placed about the reaction flask, and the reaction mixture was heated for an additional 30 minutes at a temperature of about 70 to 75°C, until infrared analysis of the reaction mixture indicated that the isocyanate groups had been consumed. The reaction product was allowed to cool, and designated "Oligomer A".

The following examples illustrate the preparation of ophthalmic lenses.

Example 2

Into a mixing flask was placed 70 parts by weight of Oligomer A, 23 parts by weight 2-phenoxyethyl acrylate, 7 parts by weight neopentylglycol diacrylate, and 0.05 parts by weight methyl benzoyl formate. The resulting mixture was stirred until the components had completely dissolved. The resulting optical casting resin was filtered into a storage vessel which was evacuated at a pressure of about 10 Torr for about 5 minutes to remove bubbles from the casting resin.

An ophthalmic lens mold was prepared by sandwiching a resilient annular gasket made of plasticized polyvinyl chloride between a 65 mm diameter glass die and a cover glass. The glass die had a polished, concave, high base curve surface with a diopter of 14. The cover glass had a polished, convex surface with a diopter of 6. It was not necessary to clamp the assembly together.

The mold cavity was filled with optical casting resin by applying a pressure of about 0.5 $Kg/cm^2$ to the storage vessel containing the degassed optical casting resin, and conducting the optical casting resin from the storage vessel through a flexible tube to the mold cavity. A hollow needle attached to the end of the flexible tube was used to introduce the optical casting resin into the mold cavity through an opening made by puncturing the sidewall of the resilient annular gasket. After filling the mold, the needle was withdrawn and the hole in the sidewall of the gasket was plugged with a screw. The filled mold was placed onto the bed of a rotating table located at the focal point of a 9 cm long high intensity mercury vapor lamp having an energy output of 120 watts/cm of source length, and irradiated for 15 seconds through both halves of the lens mold. After such exposure to ultraviolet radiation, the optical casting resin had cured to about 90 percent of final hardness, and the temperature of the cast article inside the mold had increased to about 74°C. The cast article was removed from the mold and exposed to ultraviolet radiation for an additional 10 seconds through the glass die side only to complete photopolymerization. The resulting 60 mm diameter aspheric ophthalmic lens had a Barcol hardness of 35, shrinkage during cure of 5.5 volume percent, and an almost completely colorless appearance measuring 2.0 Gardner b units.

In a comparison run, a lens was similarly prepared by polymerizing diethyleneglycol bis(allyl carbonate), using a 16 hour thermal cure cycle in a hot water bath. Bath temperature had to be carefully regulated to prevent cracking and distortion of the lens and breaking of the glass die. The cured lens had a Barcol hardness of 22, shrinkage during cure of 11 volume percent, and an initial color of 1.2 Gardner b units.

This example shows that the optical casting resins of this invention provide cast optical articles having rapid cure, high Barcol hardness, low polymerization shrinkage, and low yellow coloration. A lens shape which tends to crack or distort when prepared from diethyleneglycol bis(allyl carbonate) could be readily prepared from an optical casting resin of this invention.

Example 3

Using the method of Example 2, a lens was made using a mold prepared from an 80 mm diameter full segment bifocal glass die having a polished, concave surface with a field diopter of 3 and an add diopter of 0.22, and a cover glass having a polished, convex surface with a diopter of 6. The optical casting resin was cured using two twenty second exposures to ultraviolet radiation. The resulting 75 mm diameter bifocal lens had a Barcol hardness of 35, an initial color of 2.0 Gardner b units, and polymerization shrinkage of 5.5 volume percent.

Although lenses made from polymerized diethyleneglycol bis(allyl carbonate) having the above full segment bifocal configuration are commercially available, they are difficult to prepare. In a comparison run, an attempt was made to polymerize diethyleneglycol bis(allyl carbonate) in a similar die. Using a 16 hour cure cycle, a lens could not be successfully prepared in such a die without cracking of the lens material.

Examples 4—12

Example 2 was repeated using other diluent monomers in place of the mixture of 2-phenoxyethyl acrylate and neopentylglycol diacrylate, and using the same total amount of diluent monomer in the optical casting resin. Lenses having the hardness, scratch resistance (as measured according to the falling sand method of ASTM D-1044-73), color, and cure time shown in Table I were obtained. The lens mold used had an 80 mm diameter, a glass die with a diopter of 6, and a cover glass with a diopter of 6.

TABLE I

| Ex. No. | Diluent monomer | Barcol hardness | Scratch resistance | Color, Gardner b units | Cure time, secs. |
|---|---|---|---|---|---|
| 4 | Neopentylglycol diacrylate | 35 | 28.8 | 2.0 | 40 |
| 5 | Methyl methacrylate | 38 | 23.7 | 2.3 | 40 |
| 6 | Tetrahydrofurfuryl methacrylate | 18 | 11.7 | 1.6 | 40 |
| 7 | Isobornyl methacrylate | 34 | 21.7 | 3.0 | 40 |
| 8 | 1,6-Hexanediol diacrylate | 30 | 7.6 | 2.7 | 40 |
| 9 | Pentaerythritol tetraacrylate | 44 | 8.9 | 2.8 | 40 |
| 10 | n-Butylcarbamoyloxyethyl methacrylate | 24 | 17.5 | 1.7 | 40 |
| 11 | Trimethylolpropane triacrylate | 40 | 11.8 | 3.4 | 40 |
| 12 | Ethoxylated bisphenol-A diacrylate | 19 | 8.5 | 5.3 | 40 |

Example 13

Normal use weathering of cast lens blanks prepared from the optical casting resin of Example 2 was evaluated by placing the lens blanks on a window ledge for 6 hours a day. Other lens blanks prepared from optical casting resins made by adding 0.5 weight percent of various ultraviolet absorbers to the resin of Example 2 were similarly evaluated. Set out below in Table II are the ultraviolet absorbers used and the lens color before the start of exposure and after 1 week and 4 month exposures. This example shows that 2-hydroxy-4-methoxy-6′-carboxybenzophenone and 2-ethylhexyl 2-cyano-3,3-diphenylacrylate were especially effective ultraviolet absorbers for use in this invention.

TABLE II

| Ultraviolet absorber | Color, Gardner b units | | |
|---|---|---|---|
| | Initial | 1 Week | 4 Months |
| None | 3.4 | 2.9 | 3.9 |
| "Tinuvin 292"[1] | 4.4 | 3.5 | 4.6 |
| 2-Hydroxy-4-methoxybenzophenone | 4.2 | 3.3 | 4.2 |
| 2-Hydroxy-4-methoxy-6′-carboxybenzophenone | 3.9 | 3.2 | 3.4 |
| 2-Ethylhexyl 2-cyano-3,3-diphenylacrylate | 3.7 | 3.0 | 3.3 |

[1] Hindered amine light absorber, commercially available from Ciba-Geigy Corp.

Example 14

Hydrolytic and chemical resistance of cast lens blanks prepared from the optical casting resin of Example 2 was evaluated by immersing the cured lens blanks in various media. Unless indicated otherwise, all lens blanks were immersed for 7 days at room temperature. After immersion, the lens blanks were rinsed and blotted dry, and measured for weight gain, Barcol hardness loss, and increase in yellowing. Set out below in Table III are the percent weight gain, percent loss in Barcol hardness, and change in Gardner b units for lens blanks immersed in various media, along with comparison values for polymerized diethyleneglycol bis(allyl carbonate). The optical casting resin of the invention is identified in Table III as "OLM" and the diethyleneglycol bis(allyl carbonate) is identified in Table III as "CR-39", the latter identification being a trademark of PPG Industries, Inc., the supplier of the diethyleneglycol bis(allyl

carbonate) used in these examples. This example shows that cast articles prepared from the optical casting resin of Example 2 maintain their hardness and clarity even after immersion in a variety of media.

TABLE III

| Media | % Wt. gain | | Barcol % loss | | Gardner b unit change | |
|---|---|---|---|---|---|---|
| | OLM | CR-39 | OLM | CR-39 | OLM | CR-39 |
| $H_2O$ 100°C, 6 hrs. | 0.8 | 0.7 | 22 | 50 | +0.1 | +0.4 |
| 30% $H_2SO_4$ 7 days at 23°C | 0.07 | 0.05 | 6 | 20 | −0.1 | −0.5 |
| 3% $H_2SO_4$ | 0.19 | 0.17 | 12 | 32 | +0.2 | −0.5 |
| 10% $HNO_3$ | 0.18 | 0.16 | 18 | 32 | 0.0 | +0.2 |
| 10% HCl | 0.15 | 0.13 | 3.4 | 0 | −0.1 | 0.0 |
| 10% $NH_4OH$ | 0.2 | 0.18 | 31 | 43 | +0.5 | +0.3 |
| 10% NaOH | 0.12 | 0.07 | 12 | 35 | +0.1 | −0.1 |
| 2% $Na_2CO_3$ | 0.19 | 0.17 | 12.2 | 45.5 | +0.1 | +0.1 |
| 2% NaCl | 0.20 | 0.18 | 17.2 | 26.4 | −0.1 | −0.2 |
| 3% $H_2O_2$ | 0.2 | 0.18 | 9.7 | 50 | +0.2 | −0.3 |
| 95% $CH_3CH_2OH$ | 0.4 | 0.11 | 38.3 | 13 | 0.0 | 0.0 |
| 50% $CH_3CH_2OH$ | 0.28 | 0.18 | 15 | 46 | 0.0 | 0.0 |
| Acetone | 2.74 | 0.93 | 100 | 100 | −0.2 | −0.3 |
| Ethyl acetate | 1.25 | 0.53 | 85 | 30 | −0.3 | −0.2 |
| $CCl_4$ | 0.01 | 0.03 | 2.9 | 0 | −0.1 | 0.0 |
| $CHCl_3$ | 1.95 | 2.86 | 100 | 100 | 0.0 | −0.3 |
| 5% Acetic acid | 0.21 | 0.12 | 17.2 | 30 | −0.2 | −0.4 |
| Gasoline | 0.01 | 0.00 | 0.0 | 0.0 | −0.4 | −0.4 |
| Toluene | 0.18 | 0.15 | 11.8 | 13.1 | −0.2 | 0.0 |
| Tetrahydrofuran | 1.66 | 0.48 | 67.7 | 50 | −0.4 | 0.0 |

Examples 15—17

Examples 1 and 2 were repeated, using other polyols in place of the polyol of Example 1, and using the same total amount of polyol to prepare the optical casting resin. The lens mold used was an 80 mm diameter mold having a glass die with a polished, concave surface having a diopter of 6, and a cover glass with a polished, convex surface having a diopter of 6. Shown below in Table IV are the Example No., polyol, and the Barcol hardness, color, and cure time of the resulting 80 mm diameter ophthalmic lenses.

TABLE IV

| Ex. No. | Polyol | Barcol hardness | Color, Gardner b units | Cure time, sec. |
|---|---|---|---|---|
| 15 | "Lexorez" XP 142 | 26 | — | 40 |
| 16 | "Rucoflex" F-2016-185 | 15 to 20 | 3.8 | 40 |
| 17 | "Niax" LS-490 | 40 | 5.5 | 40 |

Comparative Examples 1—3

Examples 1 and 2 were repeated, using urethane resins outside the scope of this invention in place of the polymerizable carbamic ester resin of Example 1, and using the same total amount of polyol to prepare the optical casting resin. Shown below in Table V are the Comparative Example No., polyol, ethylenically unsaturated isocyanate, and the Barcol hardness of the resulting ophthalmic lenses. These Comparative Examples show that optical casting resins had a very low Barcol hardness when prepared from polyester polyols having insufficient hydroxyl functionality or from polymerizable urethane resins having only two urethane linkages per side chain.

TABLE V

| Comparative example number | Polyol | Ethylenically unsaturated isocyanate | Barcol hardness |
|---|---|---|---|
| 1 | "Lexorez" 1831-65[1] | 2-Isocyanatoethyl methacrylate | <1 |
| 2 | "Lexorez" 1831-65 | 1 mole to 1 mole reaction product of isophorone diisocyanate and 2-hydroxyethyl methacrylate | <1 |
| 3 | "Lexorez" 1400-220[2] | 2-Isocyanatoethyl methacrylate | 10 |

[1] Polyester polyol derived from trimethylolpropane, neopentylglycol, 1,6-hexanediol, diethyleneglycol, and adipic acid, having a hydroxyl functionality of 3.4, a hydroxyl equivalent weight of 863, and a molecular weight of 2935.

[2] Polyester polyol derived from neopentylglycol, 1,6-hexanediol, and adipic acid, having a hydroxyl functionality of 2, a hydroxyl equivalent weight of 255, and a molecular weight of 510.

Comparative Example 4

Example 1 was repeated using the same amounts of reactants but using acrylic acid in place of 2-isocyanatoethyl methacrylate (thereby forming a polymer product having no urethane linkages between the methacrylate end groups and the polymer backbone). When the polymer product was used to prepare a cast article according to the method of Example 2, a very soft, cheesy cast article was obtained. The article had a Barcol hardness less than 1. This comparative example shows that optical casting resins prepared from polymers having no urethane side chain linkages had very low Barcol hardness.

## Claims

1. Optical articles of cured polymerizable resin, said polymerizable resin comprising

(a) 50 to 80% by weight of one or more polymerizable carbamic ester resins having 4 or more polymer side chain groups having a single urethane linkage and terminal olefinic functionality,

(b) 50 to 20% by weight of one or more diluent monomers having one or more ethylenically-unsaturated groups copolymerizable with ethylenically-unsaturated compounds, and

(c) zero to 5% by weight of an energy-activatable source of free radicals; characterized in that said polymerizable carbamic ester resin, when uncured, has a backbone derived from a polyol having (1) at least 4 hydroxyalkyl or hydroxycycloalkyl groups per molecule, (2) a hydroxyl equivalent weight of 75 to 1000, and (3) a molecular weight of 300 to 5000 and is a liquid at a temperature above 40°C, said optical articles have a thickness greater than 2 millimeters, an index of refraction greater than 1.45 and less than 1.75, light transmission greater than 85%, yellow coloration less than 4 Gardner b units, and a Barcol hardness greater than 15.

2. Optical articles according to Claim 1, characterized in that said polymerizable resin comprises 60 to 80 percent by weight of said polymerizable carbamic ester resin and 40 to 20 percent by weight of said diluent monomer.

3. Optical articles according to any preceding claim, characterized in that said backbone is derived from a polyol having a hydroxyl equivalent weight of 175 to 300 and a molecular weight of 700 to 2100.

4. Optical articles according to any preceding claim, characterized in that said polymerizable carbamic ester resins have the formula:

$$[H_2C{=}\overset{R^1}{\overset{|}{C}}-A-NH-\overset{O}{\overset{\|}{C}}-O]_nB$$

wherein:

$R^1$ is a hydrogen atom or a methyl radical;

A is a divalent aliphatic radical selected from $-R^2-$ and

$$-\overset{\overset{\displaystyle O}{\|}}{C}OR^2-,$$

in which $R^2$ is an alkylene radical having 1 to 6 carbon atoms or a 5- or 6-membered cycloalkylene radical having 5 to 10 carbon atoms, said aliphatic radical optionally containing 1 or 2 catenary oxygen atoms or

$$-\overset{\overset{\displaystyle O}{\|}}{C}O-$$

groups;

B is said backbone and is a polyvalent radical obtained by removal of the hydroxyl groups from a polyester polyol, polyether polyol, or polyacrylate polyol; and

n is 4 to 15.

5. Optical articles according to any preceding claim, characterized in that said backbone is derived from a polyester polyol.

6. Optical articles according to any preceding claim, characterized in that said polyester polyol is an ester of cyclic and acyclic compounds, said cyclic compounds being selected from the group consisting of alicyclic dicarboxylic acids having 5 to 8 carbon atoms per molecule, aromatic dicarboxylic acids having 5 to 15 carbon atoms per molecule, anhydrides of said alicyclic and said aromatic dicarboxylic acids, and cycloalkylene diols having 4 to 15 carbon atoms per molecule, said acyclic compounds being aliphatic acyclic polyols having 2 to 15 carbon atoms per molecule, and said cyclic and acyclic compounds being combined in a ratio between 0.02:1 and 0.5:1.

7. Optical articles according to any preceding claim, further characterized in that said article is an ophthalmic lens or a video disk.

8. A process for preparing cast optical articles according to any of Claims 1 to 4 or 7, characterized in that:

a) bubbles are removed from a polymerizable carbamic ester resin prepared by (i) reacting together at least one monoisocyanato-substituted addition-polymerizable terminal monoethylenically-unsaturated organic compound and at least one polyol having four to 15 hydroxyalkyl or hydroxycycloalkyl groups per molecule, a hydroxyl equivalent weight of 75 to 1000, and a molecular weight of 300 to 5,000, the resulting reaction product being essentially free of unreacted isocyanate; and (ii) 50 to 80 parts by weight of said reaction product are mixed with 50 to 20 parts by weight of at least one diluent monomer having one or more ethylenically-unsaturated groups copolymerizable with ethylenically-unsaturated compounds, and 0 to 5 parts by weight of an energy-activatable source of free radicals;

b) the resulting optical casting resin is introduced into a suitable mold; and

c) said optical casting resin is polymerized.

9. Polymerizable carbamic ester resins, having 4 or more polymer side chain groups having a single urethane linkage and terminal olefinic functionality, for use in any preceding claim, characterized in that said resins have a backbone derived from a polyester polyol having (1) at least 4 hydroxyalkyl or hydroxycycloalkyl groups per molecule, (2) a hydroxyl equivalent weight of 75 to 1000, and (3) a molecular weight of 300 to 5000 and is a liquid at a temperature above 40°C.

10. Polymerizable carbamic ester resins, having 4 or more polymer side chain groups having a single urethane linkage and terminal olefinic functionality, for use in any of Claims 1 to 4, 7, or 8, characterized in that said resins have a backbone derived from a polyacrylate polyol having (1) at least 4 hydroxyalkyl or hydroxycycloalkyl groups per molecule, (2) a hydroxyl equivalent weight of 75 to 1000, and (3) a molecular weight of 300 to 5000 and is a liquid at a temperature above 40°C.

**Patentansprüche**

1. Optische Artikel aus einem gehärteten polymerisierbaren Harz, das

(a) 50 bis 80 Gew.% eines oder mehrerer polymerisierbarer Carbaminsäureesterharze enthält, die vier oder mehr Polymerseitenkettengruppen besitzen, die ihrerseits eine einzige Urethanbindung und eine endständige olefinische Funktionalität besitzen;

(b) 50 bis 20 Gew.% eines oder mehrerer monomerer Verdünnungsmittel enthält, die ein oder mehrere ethylenisch ungesättigte Gruppen besitzen, die mit ethylenisch ungesättigten Verbindungen copolymerisierbar sind, und

(c) null bis 5 Gew.% einer energieaktivierbaren Quelle von freien Radikalen enthält; dadurch gekennzeichnet, daß das polymerisierbare Carbominsäureharz im ungehärteten Zustand eine Hauptkette besitzt, die von einem Polyol abgeleitet ist, das (1) mindestens vier Hydroxyalkyl- oder Hydroxycycloalkylgruppen pro Molekül, (2) ein Hydroxyläquivalentgewicht von 75 bis 1000 und (3) ein

Molekulargewicht von 300 bis 5000 besitzt und bei Temperaturen über 40°C flüssig ist, und daß die optischen Artikel eine Dicke über 2 mm, eine Brechzahl von mehr als 1,45 und weniger als 1,75, eine Lichtdurchlässigkeit von mehr als 85%, eine Gelbfärbung von weniger als 4 Gardner b-Einheiten und eine Barcol-Härte über 15 besitzen.

2. Optische Artikel nach Anspruch 1, dadurch gekennzeichnet, daß das polymerisierbare Harz 60 bis 80 Gew.% des polymerisierbaren Carbaminsäureharzes und 40 bis 20 Gew.% des monomeren Verdünnungsmittels enthält.

3. Optische Artikel nach einem der vorhergehenden Ansprüche, dadurch gekennzeichnet, daß die Hauptkette von einem Polyol abgeleitet ist, das ein Hydroxyläquivalentgewicht von 175 bis 300 und ein Molekulargewicht von 700 bis 2100 besitzt.

4. Optische Artikel nach einem der vorhergehenden Ansprüche, dadurch gekennzeichnet, daß die polymerisierbaren Carbaminsäureharze die Formel

$$[H_2C{=}\overset{\overset{R^1}{|}}{C}{-}A{-}NH{-}\overset{\overset{O}{\|}}{C}{-}O]_nB$$

haben, in der

$R^1$ ein Wasserstoffatom oder ein Methylradikal ist,

A ein zweiwertiger aliphatisches Radikal ist, das ausgewählt ist aus $-R^2-$ und

$$-\overset{\overset{O}{\|}}{C}OR^2-,$$

wobei $R^2$ ein Alkylenradikal mit 1 bis 6 Kohlenstoffatomen oder ein 5- oder 6-gliedriges Cycloalkylenradikal mit 5 bis 10 Kohlenstoffatomen ist, und das aliphatische Radikal gegebenenfalls ein oder zwei Kettensauerstoffatome oder

$$-\overset{\overset{O}{\|}}{C}O-$$

Gruppen enthält,

B die genannte Hauptkette ist und aus einem mehrwertigen Radikal besteht, das durch Abspalten der Hydroxylgruppen von einem Polyesterpolyol, Polyetherpolyol oder Polyacrylatpolyol erhalten worden ist, und

n 4 bis 15 ist.

5. Optische Artikel nach Anspruch 4, dadurch gekennzeichnet, daß die Hauptkette von einem Polyesterpolyol abgeleitet ist.

6. Optische Artikel nach einem der vorhergehenden Ansprüche, dadurch gekennzeichnet, daß das Polyesterpolyol ein Ester von zyklischen und azyklischen Verbindungen ist, die zyklischen Verbindungen aus der Gruppe ausgewählt sind, die aus den alizyklischen Dicarbonsäuren mit 5 bis 8 Kohlenstoffatomen pro Molekül, den aromatischen Dicarbonsäuren mit 5 bis 15 Kohlenstoffatomen pro Molekül, den Anhydriden der genannten alizyklischen und aromatischen Dicarbonsäuren und den Cycloalkylendiolen mit 4 bis 15 Kohlenstoffatomen pro Molekül besteht, daß die genannten azyklischen Verbindungen aliphatische azyklische Polyole mit 2 bis 15 Kohlenstoffatomen pro Molekül sind, und daß die zyklischen und azyklischen Verbindungen in einem Verhältnis zwischen 0,02:1 und 0,5:1 miteinander kombiniert sind.

7. Optische Gegenstände nach einem der vorhergehenden Ansprüche, dadurch gekennzeichnet, daß der Gegenstand eine augenoptische Linse oder eine Videoplatte ist.

8. Verfahren zum Erzeugen von gegossenen optischen Gegenständen nach einem der Ansprüche 1 bis 4 und 7, dadurch gekennzeichnet, daß:

a) ein polymerisierbares Carbaminsäureesterharz verwendet wird, zu dessen Erzeugung (i) mindestens eine mit Monisocyanat substituierte, additionspolymerisierbare, endständig monoethylenisch ungesättigte organische Verbindung und mindestens ein Polyol mit vier bis 15 Hydroxyalkyl- oder Hydroxycycloalkylgruppen pro Molekül, einem Hydroxyläquivalentgewicht zwischen 75 und 1000 und einem Molekulargewicht zwischen 300 und 5000 miteinander umgesetzt werden, wobei ein von nicht umgesetztem Isocyanat im wesentlichen freies Reaktionsprodukt erhalten wird, und ii) 50 bis 80 Gewichtsteile dieses Reaktionsproduktes mit 50 bis 20 Gewichtsteilen mindestens eines monomeren Verdünnungsmittels gemischt werden, das eine oder mehrere ethylenisch ungesättigte Gruppen enthält, die mit ethylenisch ungesättigten Verbindungen copolymerisierbar sind, sowie mit 0 bis 5 Gewichtsteilen einer energieaktivierbaren Quelle von freien Radikalen, worauf von diesem polymerisierbaren Carbaminsäureester Harz Blasen entfernt werden;

b) das so erhaltene optische Gießharz in eine geeignete. Form eingebracht wird und

c) das optische Gießharz polymerisiert wird.

9. Polymerisierbare Carbaminsäureesterharze mit vier oder mehr polymeren Seitenkettengruppen, die

eine einzige Urethanbindung und endständige olefinische Funktionalitäten besitzen, für die Verwendung in einem optischen Gegenstand bzw. einem Verfahren nach einem der vorhergehenden Ansprüche, dadurch gekennzeichnet, daß die genannten Harze eine Hauptkette besitzen, die von einem Polyesterpolyol abgeleitet ist, das (1) mindestens vier Hydroxyalkyl- oder Hydroxycycloalkylgruppen pro Molekül, (2) ein Hydroxyläquivalentgewicht von 75 bis 1000 und (3) ein Molekulargewicht von 300 bis 500 besitzt und bei Temperaturen über 40°C flüssig ist.

10. Polymerisierbare Carbaminsäureesterharze mit vier oder mehr polymeren Seitenkettengruppen, die eine einzige Urethanbindung und endständige olefinische Funktionalitäten besitzen, für die Verwendung in einem optischen Gegenstand bzw. einem Verfahren nach einem der Ansprüche 1 bis 4, 7 und 8, dadurch gekennzeichnet, daß die Harze eine Hauptkette haben, die von einem Polyacrylatpolyol abgeleitet worden ist, das (1) mindestens vier Hydroxyalkyl- oder Hydroxycycloalkylgruppen pro Molekül, (2) ein Hydroxyläquivalentgewicht von 75 bis 1000 und (3) ein Molekulargewicht von 300 bis 5000 besitzt und bei Temperaturen über 40°C flüssig ist.

**Revendications**

1. Articles optiques en résine polymérisable durcie, ladite résine polymérisable comprenant

(a) 50 à 80% en poids d'une ou plusieurs résines d'ester carbamique polymérisables ayant 4 ou plus de 4 groupes latéraux par rapport à la chaîne polymère ayant chacun une seule liaison uréthane et une seule fonctionnalité oléfinique terminale,

(b) 50 à 20% en poids d'un ou plusieurs monomères diluants ayant un ou plusieurs groupes à insaturation éthylénique copolymérisables avec les composés à insaturation éthylénique, et

(c) 0 à 5% en poids d'une source de radicaux libres activables par apport d'énergie; caractérisés en ce que ladite résine d'ester carbamique polymérisable, lorsqu'elle n'est pas durcie, a une chaîne principale dérivée d'un polyol ayant (1) au moins 4 groupes hydroxyalkyle ou hydroxycycloalkyle par molécule, (2) un poids équivalent en hydroxyle de 75 à 1 000 et (3) un poids moléculaire de 300 à 5 000, et, est liquide à une température supérieure à 40°C, lesdits articles optiques ayant une épaisseur supérieure à 2 millimètres, un indice de réfraction supérieur à 1,45 et inférieur à 1,75, une transmission de la lumière supérieure à 85%, une coloration jaune inférieure à 4 unités Gardner b et une dureté Barcol supérieure à 15.

2. Articles optiques selon la revendication 1, caractérisés en ce que ladite résine polymérisable comprend 60 à 80% en poids de ladite résine d'ester carbamique polymérisable et 40 à 20% en poids dudit monomère diluant.

3. Articles optiques selon l'une quelconque des revendications précédentes, caractérisés en ce que ladite chaîne principale dérive d'un polyol ayant un poids équivalent en hydroxyle de 175 à 300 et un poids moléculaire de 700 à 2 100.

4. Articles optiques selon l'une quelconque des revendications précédentes, caractérisés en ce que lesdites résines d'ester carbamique polymérisables ont pour formule:

$$[H_2C{=}\overset{\overset{R^1}{|}}{C}—A—NH—\overset{\overset{O}{\|}}{C}—O]_nB$$

dans laquelle:

$R^1$ est l'atome d'hydrogène ou le radical méthyle,

A est un radical aliphatique divalent choisi parmi $—R^2—$ et

$$—\overset{\overset{O}{\|}}{C}OR^2—,$$

où $R^2$ est un radical alkylène ayant 1 à 6 atomes de carbone ou un radical cycloalkylène ayant 5 ou 6 sommets ayant 5 à 10 atomes de carbone, ledit radical aliphatique contenant éventuellement 1 ou 2 atomes d'oxygène caténaires ou groupe

$$—\overset{\overset{O}{\|}}{C}O—:$$

B est ladite chaîne principale et est un radical polyvalent obtenu par élimination des groupes hydroxyle d'un polyester-polyol, polyéther-polyol ou polyacrylatepolyol; et

n a pour valeur 4 à 15.

5. Article optiques selon l'une quelconque des revendications précédentes, caractérisés en ce que ladite chaîne principale dérive d'un polyester-polyol.

6. Articles optiques selon l'une quelconque des revendications précédentes, caractérisés en ce que ledit polyester-polyol est un ester de composés cycliques et acycliques, lesdits composés cycliques étant

choisis parmi l'ensemble constitué par les acides dicarboxyliques alicycliques ayant 5 à 8 atomes de carbone par molécule, les acides dicarboxyliques aromatiques ayant 5 à 15 atomes de carbone par molécule, les anhydrides desdits acides dicarboxylique alicycliques et aromatiques, et les cycloalkylènediols ayant 4 à 15 atomes de carbone par molécule, lesdits composés acycliques étant des polyols acycliques aliphatiques ayant 2 à 15 atomes de carbone par molécule et lesdits composés cycliques et acycliques étant combinés dans un rapport entre 0,02/1 et 0,5/1.

7. Article optique selon l'une quelconque des revendications précédentes, caractérisé de plus en ce que ledit article est un verre ophtalmique ou un vidéodisque.

8. Procédé pour la préparation d'articles optiques coulés selon l'une quelconque des revendications 1 à 4 ou 7, caractérisé en ce que:

a) on élimine les bulles d'une résine d'ester carbamique polymérisable préparée par (i) réaction d'au moins un composé organique à insaturation monoéthylénique terminale, polymérisable par addition, à substitution monoisocyanato avec au moins un polyol ayant 4 à 15 groupes hydroxyalkyle ou hydroxycycloalkyle par molécule, un poids équivalent en hydroxyle de 75 à 1 000 et un poids moléculaire de 300 à 5 000, le produit réactionnel résultant étant essentiellement dépourvu d'isocyanate n'ayant pas réagi; et (ii) mélange de 50 à 80 parties en poids dudit produit réactionnel avec 50 à 20 parties en poids d'au moins un monomère diluant ayant un ou plusieurs groupes à insaturation éthylénique copolymérisable avec les composés à insaturation éthylénique, et 0 à 5 parties en poids d'une source de radicaux libres activable par apport d'énergie;

b) on coule la résine optique à couler obtenue dans un moule approprié; et

c) on polymérise ladite résine optique à couler.

9. Résines d'ester carbamique polymérisables ayant 4 ou plus de 4 groupes latéraux par rapport à la chaîne polymère, chaque groupe ayant une seule liaison uréthane et une seule fonctionnalité oléfinique terminale, pour utilisation suivant l'une quelconque des revendications précédentes, caractérisées en ce que lesdites résines ont une chaîne principale dérivée d'un polyester-polyol ayant (1) au moins 4 groupes hydroxyalkyle ou hydroxycycloalkyle par molécule, (2) un poids équivalent en hydroxyle de 75 à 1 000 et (3) un poids moléculaire de 300 à 5 000 et est liquide à une température supérieure à 40°C.

10. Résines d'ester carbamique polymérisables ayant 4 ou plus de 4 groupes latéraux par rapport à la chaîne polymère ayant une seule liaison uréthane et une seule fonctionnalité oléfinique terminale, caractérisées en ce que lesdites résines ont une chaîne principale dérivée d'un polyacrylate-polyol ayant (1) au moins 4 groupes hydroxyalkyle ou hydroxycycloalkyle par molécule, (2) un poids équivalent en hydroxyle de 75 à 1 000 et (3) un poids moléculaire de 300 à 5 000 et est liquide à une température supérieure à 40°C.